(19) Europäisches Patentamt
European Patent Office
Office européen des brevets

(11) EP 4 050 299 A1

(12) EUROPÄISCHE PATENTANMELDUNG

(43) Veröffentlichungstag:
31.08.2022 Patentblatt 2022/35

(21) Anmeldenummer: 21217863.6

(22) Anmeldetag: 27.12.2021

(51) Internationale Patentklassifikation (IPC):
F41G 7/22 (2006.01)        F41H 13/00 (2006.01)
G01S 7/497 (2006.01)       G02B 26/06 (2006.01)
G02B 27/00 (2006.01)       G01S 17/66 (2006.01)

(52) Gemeinsame Patentklassifikation (CPC):
F41G 7/224; F41H 13/005; G01S 17/66;
G02B 26/0825; G02B 27/0025

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 26.02.2021 DE 102021001067

(71) Anmelder: MBDA Deutschland GmbH
86529 Schrobenhausen (DE)

(72) Erfinder: ZOZ, Jürgen
86316 Friedberg (DE)

(74) Vertreter: Isarpatent
Patent- und Rechtsanwälte Barth
Charles Hassa Peckmann & Partner mbB
Friedrichstrasse 31
80801 München (DE)

(54) **VERFAHREN UND SYSTEM ZUR MESSUNG UND UNTERDRÜCKUNG DES EINFLUSSES TURBULENTER STÖRUNGEN AUF DIE LASERBESTRAHLUNG EINES ZIELS**

(57) Ein Verfahren zur Messung und Unterdrückung des Einflusses turbulenter Störungen auf die Laserbestrahlung eines Ziels (12) umfasst Fokussieren eines Messlaserstrahls (4) auf das Ziel mit einer optischen Einrichtung (6); Kollimieren eines von dem Ziel aufgrund der Bestrahlung mit dem Messlaserstrahl zurückreflektierten und mit der optischen Einrichtung empfangenen Reflexionslaserstrahls (5) in einer Sensorebene; wiederholtes Messen einer ortsabhängigen Phase und/oder einer ortsabhängigen Amplitude des kollimierten Reflexionslaserstrahls in der Sensorebene in einer Anzahl von Einzelmessungen, wobei der Messlaserstrahl nach jeder Einzelmessung derart angepasst wird, dass die Einzelmessungen statistisch unabhängig voneinander sind; und Mitteln der gemessenen ortsabhängigen Phasen und/oder der gemessenen ortsabhängigen Amplituden über die Anzahl von Einzelmessungen zur Abschätzung einer Turbulenzstörung des Messlaserstrahls.

<u>**Fig. 1**</u>

EP 4 050 299 A1

**Beschreibung**

Die vorliegende Erfindung betrifft ein Verfahren und ein System zur Messung und Unterdrückung des Einflusses von Turbulenz auf die Laserbestrahlung eines Ziels.

Die Wirkung einer Hochenergielaserwaffe (HEL-Waffe) auf ein zu bekämpfendes Ziel wird neben der Laserleistung maßgeblich durch den Spotdurchmesser und die Intensität des Laserstrahles auf dem Ziel bestimmt. Durch Luftturbulenzen kann der Spotdurchmesser des Laserstrahls auf dem Ziel deutlich vergrößert werden, was sich grundsätzlich auf die Zieleinwirkung des Laserstrahls niederschlagen kann. Beispielsweise kann es in einem derartigen Fall notwendig werden, die Bestrahlungsdauer zu erhöhen, um eine vergleichbare Wirkung wie ohne Turbulenzeinfluss zu erzielen.

Die Auswirkungen von Turbulenzen auf einen Laserstrahl können prinzipiell in zwei Anteile aufgeteilt werden, den sogenannten Tip/Tilt-Anteil, der eine turbulenzerzeugte Wanderung des Laserspotschwerpunktes beschreibt, und den Anteil der sogenannten Turbulenzen höherer Ordnung, die zu einer Verschmierung und/oder zu einer Verbreiterung des Laserspots führen können. Die Messung und die Kompensierung der Wanderung des Laserspotschwerpunktes sind typischerweise mit geeigneten Verfahren gut handhabbar, sodass eine Wanderung des Laserspotschwerpunkts auf dem Ziel normalerweise ausreichend unterbunden werden kann.

Um auch die Auswirkungen der Turbulenzen höherer Ordnung auf den Spotdurchmesser zu verkleinern, könnten in Anlehnung an die Astronomie oder die optische Telekommunikation im Prinzip sogenannte adaptive Optiken verwendet werden. Beispielsweise könnte die Turbulenz direkt oder indirekt bestimmt und der Ausgangsstrahl darauf aufbauend mit einer konjugierten (umgekehrten) Wellenfront geeignet vorverzerrt werden, um die turbulenten Störungen bei der Strahlpropagation auf das Ziel soweit wie möglich zu kompensieren.

Einerseits könnte hierzu die turbulent gestörte Wellenfront direkt gemessen werden, z.B. wenn auf dem Ziel eine punktförmige Lichtquelle angebracht wäre und diese punktförmige Lichtquelle auf einen geeigneten Wellenfrontsensor wie beispielsweise einem Hartmann-Shack-Sensor abgebildet würde. Anschließend könnte die Kompensierung mit einem mechanisch bewegten und verformbaren Spiegel umgesetzt werden.

Andererseits könnte auch auf eine direkte Messung und den technologisch aufwendigen und dynamisch ggf. eingeschränkten Spiegelansatz verzichtet werden, indem stattdessen ein Gütemaß für den turbulenzgestörten Spot und/oder die Intensität des Spots ermittelt und die Wellenfront des fokussierten Lasers so lange nachgeregelt wird, bis ein Optimum des Gütemaßes und damit gewissermaßen indirekt auch eine kompensierende konjugierte Wellenfront gefunden ist. Für ein derartiges Verfahren wäre das Ziel z.B. mit einem Retroreflektor zu versehen, um ein eindeutiges Gütemaß zu erhalten.

Für diese Verfahren benötigen die Ziele somit entweder eine aktiv strahlende Punktquelle und/oder ein weiteres Element zur Gütemessung, z.B. einen Retroreflektor. Da Ziele, die mit eine HEL-Waffe bekämpft werden, diese Elemente im Allgemeinen nicht besitzen, erscheint die Anwendung dieser Verfahren eher schwierig. Diese Ziele werden deshalb im Folgenden als nicht kooperative Ziele bezeichnet.

Ein zentraler Unterschied in der Anwendung von Turbulenzkompensationsverfahren in HEL-Waffensystemen im Vergleich zu den bekannten und realisierten Anwendungen in der Astronomie und der lasergestützten Kommunikation dürfte hierbei darin liegen, dass weder ein natürliches Gütemaß für den Strahldurchmesser auf dem Ziel, noch eine ideale Punktquelle wie in der Astronomie zur Verfügung stehen. Erzeugt man mit einem Messlaser und/oder dem Hochenergielaser einen Spot auf dem Ziel, so erhält man keine Punktquelle, sondern einen durch Beugung und Turbulenzeinflüsse beeinflussten Spot mit endlicher Ausdehnung, welcher durch eine im Allgemeinen raue Oberfläche des Zieles reflektiert wird. Dadurch können bei der Rückpropagation neben den zu messenden turbulenten Wellenfrontstörungen auch sogenannte Speckleeffekte auftreten, welche zu zusätzlichen nicht turbulent verursachten Wellenfrontfehlern und Nullstellen in einer kollimierten Empfangsebene der HEL-Waffe führen können. Die endliche Spotausdehnung und die durch die Zielrauigkeit verursachten Speckleeffekte haben wiederum einen Einfluss auf eine Wellenfrontmessung der Turbulenz, was klassische Messverfahren, z.B. auf Basis eines Hartmann-Shack-Sensors, ungenau macht.

Allgemein ist zu beachten, dass Leuchterscheinungen aufgrund der Wechselwirkung des Laserstrahles mit dem Material des Zieles auftreten können (Prozessleuchten), welche aufgrund ihrer Strahlintensität eine Messung eines Wellenfrontsensors bzw. die Bestimmung eines Gütemaßes mehr oder weniger stark beeinflussen können. Weiterhin kann die Oberfläche des Zieles durch die Einwirkung des Hochenergie-Laserstrahls verändert werden, was wiederum die Reflexionsfähigkeit für die Messung mit einem Wellenfrontsensor bzw. für die Bestimmung eines Gütemaßes beeinflussen kann. Deshalb erscheint die Verwendung eines Hochenergielasers im Vergleich zu einem zusätzlichen Messlaser nicht unmöglich, jedoch eher ungeeignet.

Vor diesem Hintergrund liegt der vorliegenden Erfindung die Aufgabe zugrunde, praktisch anwendbare Lösungen für die präzise Turbulenzkorrektur von Laserwaffen zu finden.

Erfindungsgemäß wird diese Aufgabe gelöst durch ein Verfahren mit den Merkmalen des Patentanspruchs 1 und durch ein System mit den Merkmalen des Patentanspruchs 14.

Demgemäß ist ein Verfahren zur Messung und Unterdrückung des Einflusses turbulenter Störungen auf die Laserbestrahlung eines Ziels vorgesehen. Das Verfahren umfasst Fokussieren eines Messlaserstrahls auf das Ziel mit einer optischen Einrichtung; Kollimieren eines von dem Ziel aufgrund der Bestrahlung mit dem Messlaserstrahl zurückreflektierten und mit der optischen Einrichtung empfangenen Reflexionslaserstrahls in einer Sensorebene; wiederholtes Messen einer ortsabhängigen Phase und/oder einer ortsabhängigen Amplitude des kollimierten Reflexionslaserstrahls in der Sensorebene in einer Anzahl von Einzelmessungen, wobei der Messlaserstrahl nach jeder Einzelmessung derart angepasst wird, dass die Einzelmessungen statistisch unabhängig voneinander sind; und Mitteln der gemessenen ortsabhängigen Phasen und/oder der gemessenen ortsabhängigen Amplituden über die Anzahl von Einzelmessungen zur Abschätzung einer Turbulenzstörung des Messlaserstrahls.

Weiterhin ist ein System zur Messung und Unterdrückung des Einflusses turbulenter Störungen mit einem erfindungsgemäßen Verfahren vorgesehen. Das System umfasst eine Lasereinrichtung, welche zur Erzeugung eines Messlaserstrahls ausgebildet ist; eine optische Einrichtung, welche zur Fokussierung des Messlaserstrahls auf das Ziel, zum Empfang eines von dem Ziel aufgrund der Bestrahlung mit dem Messlaserstrahl zurückreflektierten Reflexionslaserstrahls und zur Kollimierung des zurückreflektierten Reflexionslaserstrahls in einer Sensorebene ausgebildet ist; eine Sensoreinrichtung, welche zum wiederholten Messen einer ortsabhängigen Phase und/oder einer ortsabhängigen Amplitude des kollimierten Reflexionslaserstrahls in der Sensorebene in einer Anzahl von Einzelmessungen ausgebildet ist, wobei der Messlaserstrahl nach jeder Einzelmessung derart angepasst wird, dass die Einzelmessungen statistisch unabhängig voneinander sind; und eine Berechnungseinrichtung, welche dazu ausgebildet ist, die gemessenen ortsabhängigen Phasen und/oder die gemessenen ortsabhängigen Amplituden über die Anzahl von Einzelmessungen zu mitteln und darauf aufbauend eine Turbulenzstörung des Messlaserstrahls abzuschätzen.

Eine der vorliegenden Erfindung zugrunde liegende Idee besteht darin, die Turbulenzen höherer Ordnung (im Folgenden abgekürzt als Turbulenz hO) und deren Amplitudenverteilung in der Empfangsebene durch geeignete Phasen- und Intensitätsmittelung trotz der durch die raue Oberfläche verursachten Wellenfrontfehler präzise zu messen und ggf. zu korrigieren. Mit der Erfindung wird hierbei insbesondere ein Ansatz bereitgestellt, dessen Messergebnis nicht durch die turbulenzverursachte Spotverbreiterung und die raue Zieloberfläche beeinflusst wird.

Bei dem erfindungsgemäßen Phasen- und Intensitätsmittelungsverfahren (kurz PIMV) wird für eine Einzelmessung ein Messlaser auf das Ziel fokussiert. Bei der Propagation auf das Ziel unterliegt der Messlaserstrahl dabei Turbulenzen. Dies bedeutet, dass der Spot des Messlasers auf dem Ziel (ohne Turbulenzkompensation) im Allgemeinen deutlich größer im Vergleich zu einer beugungsbegrenzten Abbildung ist. Dieser Spot wird auf der rauen Zieloberfläche reflektiert, was zu einer stochastischen Änderung der Wellenfront des rückreflektierten Strahles führt. Im Empfänger wird der rückreflektierte Strahl wieder kollimiert. Mit einem geeigneten Verfahren kann der Phasen- und der Betragsverlauf des rückreflektierten kollimierten Strahles in der Sensorebene bzw. der kollimierten Empfangsebene gemessen werden. Dieser entspricht nicht mehr dem gewünschten Phasen- und Betragsverlauf der Turbulenz, wie er bei einer punktförmigen Lichtquelle erzeugt würde, sondern ist mit einer durch die raue Oberfläche verursachten Störung überlagert.

Um den gewünschten Phasen- und Amplitudenverlauf der Turbulenz zu bestimmen, werden bei dem vorliegenden Ansatz N Einzelmessungen hintereinander durchgeführt. Bei jeder Einzelmessung wird die ortsabhängige Amplitude und die ortsabhängige Phase des kollimierten Empfangsfeld ermittelt. Für die weiteren Berechnungen kann dabei aus der ortsabhängigen Amplitude die ortsabhängige Intensität bestimmt werden. Hierbei wird angenommen, dass während der Messzeit der N Teilmessungen die Turbulenz und während einer Einzelmessung die Reflexion der rauen Oberfläche des Ziels näherungsweise konstant ist. Es wird weiterhin angenommen, dass die Reflexion des Messlasers auf einer Oberfläche erfolgt, deren Rauigkeit größer als die Wellenlänge des Messlasers ist und dass die N Teilmessungen statistisch voneinander unabhängig sind. Letzteres kann beispielsweise dadurch erreicht werden, dass der Messlaserspot auf dem Ziel nach jeder Messung geeignet verändert wird, z.B. indem er innerhalb des isoplanatischen Winkels N mal so verschoben wird, dass durch die statistische Verteilung der Rauigkeit der Oberfläche statistisch unabhängige Messungen entstehen. Mittelt man die N Phasen- und Intensitätsmessungen, so konvergieren die gemittelten Intensitäts- und Phasenverläufe gegen das gesuchte Turbulenzfeld hO.

Unter Turbulenzfeld wird hierbei der ortsabhängige Amplituden- und Phasenverlauf des optischen Feldes verstanden, den ein Punktstrahler auf dem Ziel beim Durchlaufen einer turbulenten Atmosphäre in der kollimierten Empfangsebene erzeugen würde. Das Turbulenzfeld höherer Ordnung (Turbulenzfeld hO) beschreibt damit den Anteil des Turbulenzfeldes ohne den linearen Phasenanteil (d.h. den Tip-Tilt-Anteil). Im Weiteren wird dabei davon ausgegangen, dass der Tip-Tilt-Anteil der Turbulenz bereits anderweitig kompensiert ist, der Laserspot auf dem Ziel somit keine Schwerpunktswanderung mehr zeigt.

Für die Messung des sich zeitlich ändernden Turbulenzfeldes hO kann somit die folgende Messabfolge periodisch wiederholt werden, wobei die Periodendauer deutlich kürzer sei als die Änderungszeit des Turbulenzfeldes:

- Innerhalb einer Periode werden N Einzelmessungen durchgeführt. Die Zahl N wird hierbei derart gewählt, dass eine gewünschte Messgenauigkeit für das Turbulenzfeld hO erreicht wird. Eine Einzelmessung kann in etwa folgenden Ablauf haben:

- Der Messlaser wird mittels eines optischen Elementes (z.B. eine Linse und/oder ein Teleskop) auf die Zieloberfläche fokussiert.
- Der von der rauen Zieloberfläche reflektierte Laserstrahl wird mit demselben optischen Element empfangen und kollimiert.
- Der rücklaufende kollimierte Empfangsstrahl wird durch ein geeignetes optisches Element (z.B. ein Strahlteiler oder ein Polarisationsstrahlteiler) von dem Sendestrahl getrennt.
- Das optische Feld des kollimierten Empfangsstrahls wird mit einem geeigneten phasen- und amplitudenmessenden Auswertesensor ermittelt, wobei das gemessene optische Feld zur weiteren Verarbeitung gespeichert werden kann.

- Nach Abschluss einer Einzelmessung wird der Sendestrahls des Messlasers durch eine optische Vorrichtung derart verändert, dass eine weitere statistisch unabhängige Messung erfolgen kann. Dies kann beispielsweise durch eine Tip/Tilt-Verschiebung erfolgen, die den Laserspot des Messlasers auf dem Ziel verschiebt. Es sind aber auch andere Methoden, wie beispielsweise eine Verzerrung des Sendestrahls denkbar.
- Es werden solange neue Einzelmessungen durchgeführt, bis N Messungen erreicht sind.
- Zur Schätzung des Turbulenzfeldes hO werden nach den N Einzelmessungen die gemessen ortsabhängigen Phasen- und Amplitudenverläufe gemittelt. Im Ergebnis erhält man die Schätzung des Turbulenzfeldes hO.
- Die Schätzung des Turbulenzfeldes hO kann dann ggf. genutzt werden für turbulenzunterdrückende Verfahren.
- Nach Ablauf der Periodenzeit kann der Messvorgang von neuem beginnen.

Um den vorliegenden PIMV-Ansatz in der Praxis umsetzen zu können, kann der Fachmann je nach Anwendung folgende Annahmen bzw. Voraussetzungen sicherstellen:

- Als Messlaser kommt beispielsweise ein linear polarisierter Laser (Single-Mode und Single-Frequency) mit guter Strahlqualität in Betracht.
- Die Kohärenzzeit des Messlasers sollte möglichst größer als die Messzeit einer Einzelmessung sein.
- Die Zeitkonstante für die Änderung des zu messenden Turbulenzfeldes sollte deutlich größer als die Messzeit für die N Einzelmessungen sein.
- Die Rauigkeit der Zieloberfläche sollte größer als die verwendete Wellenlänge sein.
- Während einer Einzelmessung sollten die Reflexion auf der rauen Zieloberfläche näherungsweise konstant sein.
- Die Laufzeit des Lichtes sollte bei der Taktung des Verfahrens mitberücksichtigt werden.
- Der Abstand zwischen der beschriebenen Vorrichtung und dem Ziel sollte bekannt sein, z.B. durch separate Messung.
- Die erzeugten Messlaserspots sollten innerhalb des isoplanatischen Winkel des zu messenden Turbulenzfeldes hO bleiben.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann der Messlaserstrahl nach jeder Einzelmessung auf dem Ziel verschoben und/oder verzerrt werden, um die Einzelmessungen statistisch unabhängig voneinander zumachen.

Beispielsweise kann eine Tip-Tilt-Vorrichtung dazu verwendet werden, den oder die Strahlen innerhalb des isoplanatischen Winkels N-mal auf der Zieloberfläche zu verschieben. Ebenso sind alternativ oder zusätzlich weitere Änderungen des Messlaserstrahls möglich, die zu statistisch unabhängigen Messungen führen. Beispielsweise kann der Messlaserstrahl durch Phasenänderungen geeignet verzerrt werden.

Gemäß einer Weiterbildung kann die Sensoreinrichtung einen optischen Heterodyn-Detektor umfassen. Das System kann weiterhin einen Wellenlängen-Modulator und einen Kollimator umfassen. Die Lasereinrichtung kann dazu ausgebildet sein, einen in der Wellenlänge verschobenen Modulationsstrahl des Messlaserstrahls über den Wellenlängen-Modulator und den Kollimator zu erzeugen und in die Sensoreinrichtung einzukoppeln. Die Sensoreinrichtung kann dazu ausgebildet sein, den Modulationsstrahl mit dem kollimierten Reflexionslaserstrahl zu überlagern und über eine heterodyne Detektion die ortsabhängige Phase und/oder die ortsabhängige Amplitude des kollimierten Reflexionslaserstrahls zu messen. Das Verfahren kann entsprechend Erzeugen eines in der Wellenlänge verschobenen Modulationsstrahls des Messlaserstrahls, Überlagern des Modulationsstrahls mit dem kollimierten Reflexionslaserstrahl in der Sensorebene und Messen der ortsabhängigen Phase und/oder der ortsabhängigen Amplitude des kollimierten Reflexionslaserstrahls über eine heterodyne Detektion umfassen.

In dieser Weiterbildung wir die Wellenfrontmessung einer Einzelmessung somit in besonders vorteilhafter Weise über einen optischen Heterodyn-Detektor realisiert, um den Phasen- und/oder Betragsverlauf des rückreflektierten kollimierten Strahles in der Sensoreben zu bestimmen. Bei der heterodynen Detektion wird eine Signalfrequenz durch Kombination bzw. Mischung zweier anderer Frequenzen erzeugt. Bei der Mischung entstehen prinzipiell zwei neue Signale, wobei typischerweise nur eines der beiden Signale verwendet wird und das andere Signal herausgefiltert wird. In dem vorliegenden Fall wird der Reflexionslaserstrahl mit einem Teilstrahl des Messlasers überlagert, der leicht in der Wellenlänge verschoben ist.

Gemäß einer Weiterbildung kann der Heterodyn-Detektor der Sensoreinrichtung ein Diodenarray zur Vermischung des Modulationsstrahl mit dem kollimierten Reflexionslaserstrahl umfassen.

Beispielsweise können auf einem MxM Diodenarray der Sensoreinrichtung die beiden eingekoppelten Strahlen gemischt werden (d.h. der modulierte Teilstrahl des Messlasers und der Reflexionslaserstrahl), wobei in jeder Diode ein Signal entsteht mit einer Zwischenfrequenz, die dem Wellenlängenunterschied entspricht, einer Amplitude, die der Multiplikation der Feldamplitude der beiden Strahlen entspricht, und einer Phase, die der Phasendifferenz zwischen der Referenzwelle des Messlasers und der ortsabhängigen Phase des Reflexionslaserstrahls.

Es versteht sich, dass bei einem sich bewegenden Ziel bei der Anwendung des Messverfahrens mit dieses Sensoreinrichtung bei der Analyse der Zwischenfrequenz der Dopplereffekt zu berücksichtigen ist.

Gemäß einer Weiterbildung kann das Verfahren weiterhin Anpassen der Laserbestrahlung des Ziels in Abhängigkeit von der abgeschätzten Turbulenzstörung umfassen, um den Einfluss von Turbulenzen zu kompensieren.

Die Schätzung des Turbulenzfeldes hO kann somit insbesondere dazu genutzt werden, um turbulenzunterdrückende Verfahren für einen oder mehrere Laserstrahlen durchzuführen. Beispielsweise können die Turbulenzen für einen Messlaserstrahl kompensiert werden. Derart können beispielsweise Messungenauigkeiten aufgrund von Szintillationseffekten verringert werden, indem beispielsweise der Amplitudenverlauf entsprechend angepasst wird. Ebenso ist es möglich einen Wirkstrahl, z.B. einer Laserwaffe oder einer anderen Anwendung, hinsichtlich des Einflusses von Turbulenzen zu regeln. Es ist beispielsweise denkbar, dass der beschriebene Ansatz auch in anderen technischen Bereichen Anwendung finden kann, zum Beispiel in der Augenvermessung, der optischen Telekommunikation, für bildgebende Verfahren bei starker Turbulenz etc.

Gemäß einer Weiterbildung kann eine Phasenanpassung und/oder eine Amplitudenanpassung der Laserbestrahlung des Ziels auf Basis der gemessenen ortsabhängigen Phasen und/oder der gemessenen ortsabhängigen Amplituden durchgeführt werden. Entsprechend kann das System eine Korrektureinrichtung umfassen, welche dazu ausgebildet ist, zur Turbulenzkompensation eine Phasenpassung und/oder eine Amplitudenanpassung der Laserbestrahlung des Ziels in Abhängigkeit von der abgeschätzten Turbulenzstörung durchzuführen.

Zu diesem Zweck kann beispielsweise aus dem geschätzten Phasenverlauf des Turbulenzfeldes hO eine konjugierte Wellenfront berechnet werden, mit deren Hilfe die Phase des Messlasers oder eines weiteren Lasers vorverzerrt werden kann, um turbulenzbedingte Störungen zu kompensieren. Ebenso kann mit dem ermittelten Amplitudenverlauf der ortsabhängige Amplitudenverlauf eines Ausgangsstrahls moduliert werden.

Gemäß einer Weiterbildung kann die Lasereinrichtung zur Erzeugung einer Vielzahl von kohärent gekoppelten Einzelstrahlen als Messlaserstrahl und die Korrektureinrichtung dazu ausgebildet sein, die Phasen und/oder die Amplituden der Einzelstrahlen auf Basis der gemessenen ortsabhängigen Phasen und/oder der gemessenen ortsabhängigen Amplituden anzupassen.

Gemäß einer Weiterbildung kann das Ziel mit einem Wirklaserstrahl einer Laserwaffe bestrahlt werden. Der Bestrahlung des Ziels mit dem Wirklaserstrahl kann in Abhängigkeit von der abgeschätzten Turbulenzstörung angepasst werden, um den Einfluss von Turbulenzen zu kompensieren. Entsprechend kann das System als Laserwaffe zur Erzeugung eines Wirklaserstrahls für die Bestrahlung des Ziels ausgebildet sein, welcher in Abhängigkeit von der abgeschätzten Turbulenzstörung von der Korrektureinrichtung anpassbar ist.

In dieser Weiterbildung werden somit der oder die Laserstrahlen eines HEL-Waffensystems zur Unterdrückung von Turbulenzeffekten geregelt. Die beschriebene Messanordnung kann damit genutzt werden, um die Turbulenzen hO in einem HEL-Waffensystem zu kompensieren. Das Verfahren erlaubt dabei insbesondere eine präzise Messung der turbulenzgestörten Wellenfront bei unkooperativen Zielen (d.h. militärischen, nichtinstrumentierten Zielen), wobei die Ziele im Allgemeinen eine raue Oberfläche aufweisen können. Physikalisch ist die Bandbreite des Verfahrens dabei nur durch die Laufzeit des Lichtes begrenzt und auch technisch sind keine prinzipiellen Limitationen zu erwarten. Damit eignet sich dieses Verfahren auch für die Turbulenzmessung und Unterdrückung bei sich sehr schnell bewegenden Zielen, z.B. fliegende Ziele bei Airborne-Laser-Anwendungen. Allgemein ist das Verfahren sowohl für kohärente wie konventionelle Hochenergie-Laserquellen nuztbar.

Gemäß einer Weiterbildung kann der Wirklaserstrahl auf Basis der gemessenen ortsabhängigen Phasen durch Phasenanpassung vorverzerrt werden und/oder auf Basis der gemessenen ortsabhängigen Amplituden durch Amplitudenanpassung moduliert werden.

Beispielsweise kann mit derartigen Verfahren und Anordnungen der Phasenverlauf der Turbulenz einer oder mehrerer Einzelstrahlen oder Strahlenbündel kompensiert werden, ohne dass mechanisch bewegte Teile bei der Umsetzung zwingend notwendig sind. In ähnlicher Weise können Szintillationseffekte durch Amplitudenmodulation kompensiert werden.

Gemäß einer Weiterbildung kann der Wirklaserstrahl eine Vielzahl von kohärent gekoppelten Einzelstrahlen aufweisen. Die Phasen und/oder die Amplituden der Einzelstrahlen können auf Basis der gemessenen ortsabhängigen Phasen und/oder der gemessenen ortsabhängigen Amplituden angepasst werden. Entsprechend kann die Laserwaffe zur Erzeugung einer Vielzahl von kohärent gekoppelten Einzelstrahlen als Wirklaserstrahl und die Korrektureinrichtung dazu ausgebildet sein, die Phasen und/oder die Amplituden der Einzelstrahlen auf Basis der gemessenen ortsabhängigen Phasen und/oder der gemessenen ortsabhängigen Amplituden anzupassen.

Damit kann die Erfindung insbesondere auf kohärent gekoppelte Laser mit gekachelter Apertur angewendet werden (englisch: "Coherent Beam Combing", CBC), d.h. HEL mit MxM Einzelstrahlen, die kohärent auf dem Ziel überlagert werden. Alternativ oder zusätzlich können natürlich ebenso HEL eingesetzt werden, die einen Einzel-Ausgangsstrahl aufweisen, d.h. z.B. Faserlaser, Scheibenlaser oder spektral gekoppelte Laser.

Gemäß einer Weiterbildung kann der Wirklaserstrahl als Messlaserstrahl eingesetzt werden.

Ein Vorteil dieser Variante ist es, dass neben dem Wirklaser, z.B. ein CBC HEL, kein zusätzlicher Messlaser notwendig ist. Allerdings ist in diesem Fall zu beachten, dass die Strahlreflektion von dem Ziel durch die Interaktion des HELs mit dem Zielmaterial beeinflusst werden kann. Auch die Strahlteilung und die Unterdrückung von Streustrahlung insbesondere innerhalb der Optik können technologisch eine Herausforderung darstellen.

Gemäß einer Weiterbildung kann der Wirklaserstrahl eine unterschiedliche Wellenlänge als der Messlaserstrahl aufweisen.

In diesem Fall würden Wirklaser und Messlaser somit getrennt realisierbar sein, wobei sie trotz der unterschiedlichen Wellenläge mit derselben optischen Einrichtung fokussierbar und detektierbar wären.

Gemäß einer Weiterbildung kann der Wirklaserstrahl innerhalb des isoplanatischen Winkels neben den Messlaserstrahl auf einen räumlich getrennten Bereich des Ziels fokussiert werden.

In diesem Fall wird die Turbulenzmessung nicht von der Interaktion des HELs mit dem Zielmaterial beeinflusst. Durch die Wellenlängentrennung des HELs und des Messlasers kann der PIMV-Messkanal wesentlich besser gegen HEL-Streustrahlung geschützt werden.

Gemäß einer Weiterbildung kann der Wirklaserstrahl über einen mechanisch verformbaren Spiegel geregelt werden, welcher in Abhängigkeit von der abgeschätzten Turbulenzstörung angesteuert wird. Entsprechend kann die Laserwaffe zur Erzeugung eines Einzelstrahls ausgebildet sein, welcher über einen mechanisch verformbaren Spiegel regelbar ist, der von Korrektureinrichtung in Abhängigkeit von der abgeschätzten Turbulenzstörung ansteuerbar ist.

HEL-Quellen mit Einzel-Ausgangsstrahl bieten typischerweise keine Möglichkeit, die Phasen- und Amplitudenfront des HEL-Strahls zu regeln. Um dennoch eine Turbulenzkompensation zu realisieren, wird in dieser Weiterbildung ein verformbarer Spiegel eingesetzt werden, dessen Oberfläche mit der Phase des konjugierten Turbulenzfeldes angesteuert wird. Auch in diesem Fall kann der Messlaserstrahl innerhalb des isoplanatischen Winkels neben den HEL-Spot positioniert werden kann. Damit wird die Turbulenzmessung nicht von der Interaktion des HELs mit dem Zielmaterial beeinflusst. Durch die Wellenlängentrennung des HELs und des Messlasers kann der PIMV-Messkanal wesentlich besser gegen HEL-Streustrahlung geschützt werden. Allerdings könnte dieser Ansatz aufgrund der limitierten Bandbreite eines verformbaren Spiegels in ihrer Regelbandbreite begrenzt und damit ist weniger geeignet für die Bekämpfung von schnellen Zielen bei hohen Turbulenzen sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:

Fig. 1 schematische Ansicht eines Systems zur Messung und Unterdrückung des Einflusses turbulenter Störungen auf die Laserbestrahlung eines Ziels gemäß einer Ausführungsform der Erfindung;

Fig. 2 schematisches Ablaufdiagramm eines Verfahrens zur Messung und Unterdrückung des Einflusses turbulenter Störungen mit dem System aus Fig. 1;

Fig. 3 schematische Ansicht eines Systems zur Messung und Unterdrückung des Einflusses turbulenter Störungen auf die Laserbestrahlung eines Ziels gemäß einer weiteren Ausführungsform der Erfindung;

Fig. 4 schematische Ansicht eines Systems zur Messung und Unterdrückung des Einflusses turbulenter Störungen auf die Laserbestrahlung eines Ziels gemäß einer weiteren Ausführungsform der Erfindung; und

Fig. 5 schematische Ansicht eines Systems zur Messung und Unterdrückung des Einflusses turbulenter Störungen auf die Laserbestrahlung eines Ziels gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist -jeweils mit denselben Bezugszeichen versehen.

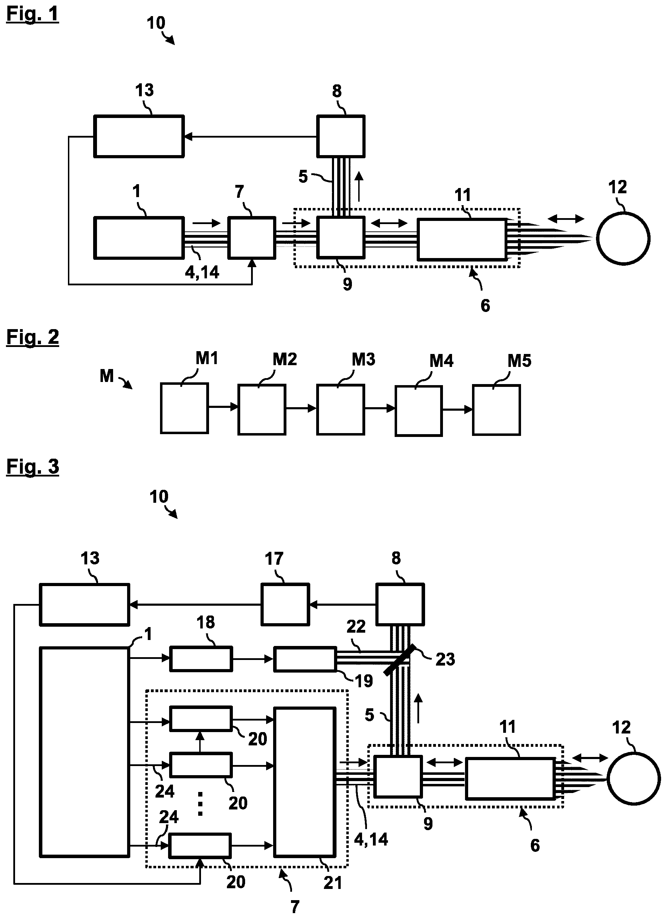

Figur 1 zeigt eine schematische Ansicht eines Systems 10 zur Messung und Unterdrückung des Einflusses turbulenter Störungen auf die Laserbestrahlung eines Ziels 12 gemäß einer Ausführungsform der Erfindung. Ein entsprechendes Verfahren M ist als Ablaufdiagramm in Fig. 2 zu sehen.

Hierbei folgt die in Fig. 1 gezeigte Variante einem generischen Grundaufbau des Systems 10, der sowohl zur Messung, als auch zur Korrektur von turbulenzbedingten Wellenfrontfehlern geeignet ist.

Das System 10 umfasst grundlegend eine Lasereinrichtung 1, welche zumindest zur Erzeugung eines (kohärenten) Messlaserstrahls 4 ausgebildet ist. Im Prinzip kann dieselbe Lasereinrichtung 1 auch zur Erzeugung eines Wirklaserstrahls 14, z.B. als Bestandteil einer Laserwaffe, ausgebildet sein, wie im Detail mit Bezug auf Fig. 3 weiter unten beispielhaft erläutert wird.

Der Messlaserstrahl 4 tritt in eine Korrektureinrichtung 7 ein, welche beispielsweise eine Tip-Tilt-Einheit umfassen kann, die den Messlaserstrahl 7 ablenken kann, z.B. um diesen über eine Zieloberfläche des Ziels 12 zu bewegen. Der Messlaserstrahl wird sodann von einer optischen Einrichtung 6 auf das Ziel gelenkt. Die optische Einrichtung 6 kann hierbei unter anderem einen Strahlteiler 9 und ein Teleskop 11 umfassen, durch welche der Messlaserstrahl 7 auf das Ziel 12 fokussiert wird. Der Messlaserstrahl 4 wird von dem Ziel 12 zurückreflektiert und tritt erneut in die optische Einrichtung 6 ein, welche diesen Reflexionslaserstrahl 5 empfängt und in einer Sensorebene einer Sensoreinrichtung 8 kollimiert.

Die Sensoreinrichtung 8 ist zum wiederholten Messen einer ortsabhängigen Phase und/oder einer ortsabhängigen Amplitude des kollimierten Reflexionslaserstrahls 5 in der Sensorebene in einer Anzahl von Einzelmessungen ausgebildet. Hierbei wird der Messlaserstrahl 4 nach jeder Einzelmessung derart angepasst, dass die Einzelmessungen statistisch unabhängig voneinander sind. Zu diesem Zweck wird der Messlaserstrahl 4 mit der Korrektureinrichtung 7 (z.B. erneut mit einer Tip-Tilt-Einrichtung) auf dem Ziel 12 innerhalb des isoplanatischen Winkels verschoben.

Die gemessenen Signale, insbesondere die aktuelle gemessene Wellenfront, werden an eine Berechnungseinrichtung 13 weitergeleitet (z.B. ein Computersystem), welche dazu ausgebildet ist, die gemessenen ortsabhängigen Phasen und/oder die gemessenen ortsabhängigen Amplituden über die Anzahl von Einzelmessungen zu mitteln und darauf aufbauend eine Turbulenzstörung des Messlaserstrahls 4 abzuschätzen. Die Berechnungseinrichtung 13 kann hierbei auch den Messablauf des Systems 10 steuern, d.h. entsprechend des beschriebenen Algorithmus die Korrektureinrichtung 7 ansteuern und entsprechend die empfangenen ortsabhängigen Phasen- und Amplitudenverläufe mitteln.

Die Korrektureinrichtung 7 kann nun ferner dazu ausgebildet sein, zur Turbulenzkompensation eine Phasenanpassung und/oder eine Amplitudenanpassung der Laserbestrahlung des Ziels 12 in Abhängigkeit von der abgeschätzten Turbulenzstörung durchzuführen. Dies kann beispielsweise eingesetzt werden, um den Wirklaserstrahl 14 einer Laserwaffe in Abhängigkeit von der abgeschätzten Turbulenzstörung zu regeln, um die Bestrahlungsqualität des Ziels 12 und damit Wirkleistung der Laserwaffe zu verbessern. Ebenso kann der Einfluss von Turbulenzen auf einen Messlaserstrahl minimiert werden.

Das mit Bezug auf Fig. 2 schematisch gezeigte Verfahren M umfasst entsprechend unter M1 Fokussieren des Messlaserstrahls 4 auf das Ziel 12 mit der optischen Einrichtung 6. Das Verfahren M umfasst unter M2 ferner Kollimieren des von dem Ziel 12 aufgrund der Bestrahlung mit dem Messlaserstrahl 4 zurückreflektierten und mit der optischen Einrichtung 6 empfangenen Reflexionslaserstrahls 5 in der Sensorebene. Das Verfahren M umfasst unter M3 ferner wiederholtes Messen der ortsabhängigen Phase und/oder der ortsabhängigen Amplitude des kollimierten Reflexionslaserstrahls 5 in der Sensorebene in einer Anzahl von statistisch unabhängigen Einzelmessungen. Das Verfahren M umfasst unter M4 ferner Mitteln der gemessenen ortsabhängigen Phasen und/oder der gemessenen ortsabhängigen Amplituden über die Anzahl von Einzelmessungen zur Abschätzung der Turbulenzstörung des Messlaserstrahls 4. Abschließend kann das Verfahren M unter M5 Anpassen der Laserbestrahlung des Ziels 12 in Abhängigkeit von der abgeschätzten Turbulenzstörung umfassen, um den Einfluss von Turbulenzen zu kompensieren.

Im Folgenden soll kurz mathematisch begründet werden, warum eine Mittelung der Phasen- und Amplitudenverläufe als Verfahren zur Bestimmung des Turbulenzfeldes geeignet ist und die Mittelung tatsächlich exakt auf das gesuchte Turbulenzfeld hO führt.

Das PIMV umfasst ein Phasenmittelungsverfahren, kurz PMV, und ein Amplituden- bzw. Intensitätsmittelungsverfahren, kurz IMV. Bei einer Propagation des auf die Zielebene fokussierten Messlaserstrahls 4 durch eine turbulente Atmosphäre, erhält man auf der Zieloberfläche die Feldverteilung $u_z^-(z_1,z_2)$:

$$u_Z{}^-(z_1, z_2) = \left(\frac{e^{jkL}}{j\lambda L}\right) e^{-j\frac{k}{2L}(z_1^2 + z_2^2)} \iint\limits_{-\infty}^{\infty} u_A{}^-(y_1, y_2)\, e^{j\frac{2\pi}{\lambda L}(z_1 y_1 + z_2 y_2)}\, dy_1\, dy_2$$

mit

$$k = \frac{2\pi}{\lambda}$$

und

$$u_A{}^-(y_1, y_2) = u_{BL}\, p(y_1, y_2)\, K^-(y_1, y_2)\, T^-(y_1, y_2)$$

$y_1$ und $y_2$ sind die Ortskoordinaten der kollimierten Sendestrahlebene, $z_1$ und $z_2$ sind die Ortskoordinaten der Zielebene. L ist hierbei der Zielabstand, $\lambda$ ist die Wellenlänge des Messlaserstrahls 4, $u_A{}^-(y_1,y_2)$ ist das Feld in der Sensorebene des noch kollimierten Sendestrahlengangs. Für die Beschreibung der Feldpropagation wird die in der Literatur übliche Fresnel-Beschreibung verwendet. Die Fokussierung und im Folgenden auch die Kollimierung sind in den Propagationsgleichungen bereits berücksichtigt.

Der Messlaserstrahl 4 wird als monomodig und Single-Frequency angenommen. Die Kohärenzlänge sollte deutlich größer als die Messzeit einer Einzelmessung sein. Die Feldverteilung des Messlasers in der Sensorebene wird als Tophat mit dem Pupillendurchmesser und einer ebenen Wellenfront angenommen. Die Amplitude sei $u_{BL}$. Andere Amplitudenverteilung, wie z.B. eine Gaußform, führen zum gleichen Ergebnis. $p(y_1,y_2)$ beschreibt hierbei die tophatförmige Pupillenfunktion.

$K^-(y_1,y_2)$ ist eine Korrekturfunktion, mit der mögliche Turbulenzkorrekturen beschrieben werden können, z.B. ein verformbarer Spiegel. $T^-(y_1,y_2)$ beschreibt die Wirkung der zum Messzeitpunkt gegebenen Turbulenz für den Sendestrahl.

Ziel einer Turbulenzkompensation ist es eine Korrekturfunktion $K^-(y_1,y_2)$ zu finden, die dazu führt, dass $u_Z{}^-(z_1,z_2)$ beugungsbegrenzt auf der Zieloberfläche abgebildet wird. Im Falle niedriger Turbulenz mit einem Szintillationsfaktor kleiner 1 ist der Betrag von $T^-(y_1,y_2)$ annähernd konstant, also für $|T^-(y_1,y_2)| \approx 1$, und eine beugungsbegrenzte Abbildung kann wie üblicherweise bei adaptiven Optiken durch die konjugierte komplexe Funktion $K^-(y_1,y_2) = T^-(y_1,y_2)^* = T^+(y_1,y_2)$ erreicht werden. $K^-(y_1,y_2)$ ist hierbei nur über der Pupille definiert. Ziel des Verfahrens PVM ist es somit, die Funktion $T^+(y_1,y_2)$ zu ermitteln.

Die Rauigkeit der Zieloberfläche wird durch einen Rauigkeitsfunktion $r(z_1,z_2)$ für die Zieloberfläche beschrieben. Die Rauigkeit der Oberfläche führt zu einer ortsabhängigen statistischen Phase der reflektierten Welle. Diese wird durch eine stochastische Reflexionsfunktion $r(z_1,z_2)$ modelliert. Der Betrag $r_0$ von $r(z_1,z_2)$ sei für diese Betrachtung ortsunabhängig und 1; das Phasenrauschen $\Delta\varphi_s(z_1,z_2)$ gleichverteilt zwischen $-\pi$ und $\pi$ und die örtliche Autokorrelation des Phasenrauschen annähernd eine Delta-Funktion. Mit Hilfe von Simulationen lässt sich zeigen, dass die Einschränkung $r_0$ =konst, d.h. ortsunabhängig, nicht notwendig ist. Diese Annahme ist jedoch wahrscheinlich für die meisten Materialen ohnehin gerechtfertigt und vereinfacht die folgende Ableitung:

$$r(z_1, z_2) = r_0\, e^{j\Delta\varphi_s(z_1,z_2)}$$

Das Feld der rücklaufenden Welle ist somit

$$u_Z{}^+(z_1, z_2) = u_Z{}^-(z_1, z_2)\, r(z_1, z_2)$$

Propagiert man dieses Feld zurück auf die kollimierte afokale Pupillenebene, so erhält man:

$$u_A{}^+(y_1, y_2) = T^+(y_1, y_2)\, \frac{1}{(\lambda L)^2}\, e^{j2kL} \iint\limits_{-\infty}^{\infty} \{a(z_1, z_2)\, r(z_1, z_2)\} e^{-j\frac{2\pi}{\lambda L}(z_1 y_1 + z_2 y_2)}\, dz_1\, dz_2$$

mit

$$a(z_1, z_2) = \iint\limits_{-\infty}^{\infty} u_A{}^-(y_1, y_2)\, e^{j\frac{2\pi}{\lambda L}(z_1 y_1 + z_2 y_2)}\, dy_1\, dy_2$$

Wäre $r(z_1, z_2)$ eine Deltafunktion, könnte $T^+(y_1, y_2)$ bis auf den Tip/Tilt-Anteil eindeutig gemessen werden. (Dies macht man sich bei den astronomischen adaptiven Systemen zu Nutze, in dem man z.B. einen Stern nutzt, der als unendlich kleine Lichtquelle betrachtet werden kann.) Aufgrund der endlichen Ausdehnung des Messlasers auf der Zieloberfläche und der Reflexion an der rauen Zieloberfläche ist jede Einzelmessung gestört und repräsentiert nicht mehr den Phasenschirm $T^+(y_1, y_2)$. Durch die Messung von N statistisch unabhängigen Phasenverläufen von $u_A{}^+(y_1, y_2)$ und deren Mittelung kann der Phasenschirm $T^+(y_1, y_2)$ bis auf den Tip/Tilt-Anteil geschätzt werden. Dies wird als PMV bezeichnet.

Anmerkung: Es ist bekannt, dass der Tip/Tilt-Anteil der Turbulenz separat gemessen werden muss. Im Folgenden wird die Schätzung des Phasenverlaufes von $T^+(y_1, y_2)$ mit Hilfe des Phasenmittelungsverfahrens mathematisch abgeleitet.

Für $T^+(y_1, y_2)$ gilt:

$$T^+(y_1, y_2) = |T^+(y_1, y_2)|\, e^{j\varphi_T(y_1, y_2)}$$

$\varphi_T(y_1, y_2)$ ist der Phasenverlauf von $T^+(y_1, y_2)$, auch turbulente Wellenfront genannt.

$\overline{\varphi_M}(y_1, y_2)$ sei der Phasenverlauf, der bei einer Mittelung von N statistisch unabhängigen Phasenverläufen von $u_{A_i}{}^+(y_1, y_2)$ entsteht:

$$\overline{\varphi_M}(y_1, y_2) \approx \frac{1}{N} \sum_{i=1}^{N} \left\{ \arctan^* \left( \frac{\mathrm{Im}\left( u_{A_i}{}^+(y_1, y_2) \right)}{\mathrm{Re}\left( u_{A_i}{}^+(y_1, y_2) \right)} \right) \right\}$$

$\arctan^*$ sei hierbei der erweiterte ARCTAN, der die Phase der komplexen Funktion zwischen $-\pi$ und $\pi$ bestimmt.

Diese N statistisch unabhängigen Einzelmessungen können z.B. durch vorgegebene Tip/Tiltbewegungen des Messlasers auf der Zieloberfläche realisiert werden. Da sich zeigen wird, dass die turbulente Wellenfront nur bis auf linearen Phasenfaktor bestimmt werden kann, können diese zusätzlichen linearen Phasenfaktoren am Ende wieder herausgerechnet werden. (Bei geschickter Wahl der vorgegebenen Tip/Tiltbewegungen können sich die linearen Phasenfaktoren auch herausmitteln.)

Eine Mittelung der Phasen von N komplexen Zahlen entspricht der Multiplikation der N komplexen Zahlen und daraus die Ermittlung der Phase geteilt durch die Anzahl N. Deshalb kann die obige Gleichung umgeschrieben werden zu:

$$\overline{\varphi_M}(y_1, y_2) \approx \frac{1}{N} \left\{ \arctan^* \left( \frac{\mathrm{Im}(P_N(y_1, y_2))}{\mathrm{Re}(P_N(y_1, y_2))} \right) + \arctan^* \left( \frac{\mathrm{Im}(T^+(y_1, y_2))}{\mathrm{Re}(T^+(y_1, y_2))} \right) \right\}$$

$$= \frac{1}{N} \left\{ \arctan^* \left( \frac{\mathrm{Im}(P_N(y_1, y_2))}{\mathrm{Re}(P_N(y_1, y_2))} \right) + N\, \varphi_T(y_1, y_2) \right\}$$

$$= \frac{1}{N} \left\{ \arctan^* \left( \frac{\mathrm{Im}(P_N(y_1, y_2))}{\mathrm{Re}(P_N(y_1, y_2))} \right) \right\} + \varphi_T(y_1, y_2)$$

mit

$$P_N(y_1, y_2) = \prod_{i=1}^{N} b_i(y_1, y_2)$$

$$b_i(y_1, y_2) = \frac{1}{(\lambda L)^2} e^{j2kL} \iint_{-\infty}^{\infty} \{a(z_1, z_2)\, r_0\, e^{j\Delta\varphi_{si}(z_1, z_2)}\} e^{-j\frac{2\pi}{\lambda L}(z_1 y_1 + z_2 y_2)}\, dz_1\, dz_2$$

Diese Gleichungen zeigen, dass mit Hilfe des Phasenmittelungsverfahrens die turbulente Wellenfront bis auf einen Stör-Anteil $S(y_1, y_2)$ ermittelt werden kann. Dieser Anteil wird im Folgenden näher analysiert:

$$S(y_1, y_2) = \frac{1}{N} \left\{ \arctan^* \left( \frac{\text{Im}(P_N(y_1, y_2))}{\text{Re}(P_N(y_1, y_2))} \right) \right\}$$

Zunächst wird der Produktterm $P_N(y_1, y_2)$ näher betrachtet. Da die Einzelterme $b_i(y_1, y_2)$ sich als Fouriertransformierte der Feldfunktion $\{a(z_1, z_2)\, r_0\, e^{j\Delta\varphi si(\vec{z})}\}$ auf der Zielebene darstellen lassen, entspricht der Multiplikation auf der Aperturebene einer Faltung der Feldverteilung auf der Zielebene:

$$p_N(z_1, z_2) = k_p \left\{ a(z_1, z_2)\, r_0\, e^{j\Delta\varphi_{s1}(z_1, z_2)} \right\} * \ldots * \left\{ a(z_1, z_2)\, r_0\, e^{j\Delta\varphi_{sN}(z_1, z_2)} \right\}$$

$k_p$ ist eine komplexe Konstante, die alle Vorfaktoren zusammenfasst. Schreibt man diese Gleichung in Integralform für die N-fache Faltung, so erhält man folgenden Ausdruck:

$$p_N(z_1, z_2) = k_p\, r_0^N \int_{-\infty}^{\infty} \ldots \int_{-\infty}^{\infty} a(z_{1_1}, z_{2_1}) \left( \prod_{i=2}^{N-1} a\left(z_{1_i} - z_{1_{i-1}}, z_{2_i} - z_{2_{i-1}}\right) \right)$$

$$a\left(z_1 - z_{1_{N-1}}, z_2 - z_{2_{N-1}}\right) e^{j\, f\left(z_{1_1} \cdots z_{2_{N-1}}, z_1, z_2\right)}\, dz_{1_1}\, dz_{2_1} \ldots dz_{1_{N-1}}\, dz_{2_{N-1}}$$

mit

$$f\left(z_{1_1} \ldots z_{2_{N-1}}, z_1, z_2\right)$$

$$= \Delta\varphi_{s_1}(z_{1_1}, z_{2_1}) + \left( \sum_{i=2}^{N-1} \Delta\varphi_{s_i}\left(z_{1_i} - z_{1_{i-1}}, z_{2_i} - z_{2_{i-1}}\right) \right)$$

$$+ \Delta\varphi_{s_N}\left(z_1 - z_{1_{N-1}}, z_2 - z_{2_{N-1}}\right)$$

Drückt man die Feldverteilung auf der Zielebene noch durch Betrag und Phase aus

$$a\left(z_{1_i}, z_{2_i}\right) = \left| a\left(z_{1_i}, z_{2_i}\right) \right| e^{j\varphi_a\left(z_{1_i}, z_{2_i}\right)}$$

so ergibt sich

$$p_N(z_1, z_2) = k_p\, r_0^N \int_{-\infty}^{\infty} \ldots \int_{-\infty}^{\infty} \left| a(z_{1_1}, z_{2_1}) \right| \left( \prod_{i=2}^{N-1} \left| a\left(z_{1_i} - z_{1_{i-1}}, z_{2_i} - z_{2_{i-1}}\right) \right| \right)$$

$$\left|a\left(z_1 - z_{1_{N-1}}, z_2 - z_{2_{N-1}}\right)\right| e^{j\, f_a\left(z_{1_1} \dots z_{2_{N-1}}, z_1, z_2\right)} \; dz_{1_1} \, dz_{2_1} \dots dz_{1_{N-1}} \, dz_{2_{N-1}}$$

mit

$$
\begin{aligned}
f_a&\left(z_{1_1} \dots z_{2_{N-1}}, z_1, z_2\right) \\
&= \Delta\varphi_{s_1}\left(z_{1_1}, z_{2_1}\right) + \varphi_a\left(z_{1_1}, z_{2_1}\right) \\
&\quad + \sum_{i=2}^{N-1} \left(\Delta\varphi_{s_i}\left(z_{1_i} - z_{1_{i-1}}, z_{2_i} - z_{2_{i-1}}\right) + \varphi_a\left(z_{1_i} - z_{1_{i-1}}, z_{2_i} - z_{2_{i-1}}\right)\right) \\
&\quad + \Delta\varphi_{s_N}\left(z_1 - z_{1_{N-1}}, z_2 - z_{2_{N-1}}\right) + \varphi_a\left(z_1 - z_{1_{N-1}}, z_2 - z_{2_{N-1}}\right)
\end{aligned}
$$

Aufgrund des Phasensprungs bei π und -π kann man zeigen, dass bei den gegebenen statistischen Eigenschaften von $\Delta\varphi_{s_i}$ und großem N die Phasenverläufe von $\varphi_a(z_{1_1}, z_{2_1}), \dots, \varphi_a(z_1 - z_{1_{N-1}}, z_2 - z_{2_{N-1}})$ komplett "verwürfelt" werden und es gilt:

$$e^{j f_a\left(\left(z_{1_1} \dots z_{2_{N-1}}, z_1, z_2\right)\right)} \approx 1$$

Dies kann man sich sehr einfach vergegenwärtigen, wenn man berücksichtigt, dass man in der Exponentialfunktion die Summe aus statistisch unabhängigen weißen Rauschen addiert. Dadurch nähert man sich dem Mittelwert null und somit dem Exponentialwert 1.

Für $p_N(z_1, z_2)$ folgt daraus:

$$p_N(z_1, z_2) \approx k_p r_0^{\,N} \int_{-\infty}^{\infty} \dots \int_{-\infty}^{\infty} \left|a\left(z_{1_1}, z_{2_1}\right)\right| \left(\prod_{i=2}^{N-1} \left|a\left(z_{1_i} - z_{1_{i-1}}, z_{2_i} - z_{2_{i-1}}\right)\right|\right)$$

$$\left|a\left(z_1 - z_{1_{N-1}}, z_2 - z_{2_{N-1}}\right)\right| \; dz_{1_1} \, dz_{2_1} \dots dz_{1_{N-1}} \, dz_{2_{N-1}}$$

$$\approx r_0^{\,N} \{|a(z_1, z_2)|\} * \dots * \{|a(z_1, z_2)|\}$$

$p_N(z_1, z_2)$ kann also näherungsweise beschrieben werden durch N-mal die Faltung vom Betrag von $\alpha(z_1, z_2)$. Normiert man die Betragsfunktion von $\alpha(z_1, z_2)$ auf eins, kann sie als Wahrscheinlichkeitsverteilungsfunktion interpretiert und für die N-malige Faltung kann der zentrale Grenzwertsatz angewendet werden Es ergibt sich eine reelle positive Gaußfunktion.

Der zweidimensionale Mittelwert $\vec{Z}_{P_N} = (Z_{P_{N_1}}, Z_{P_{N_2}})$ dieser Gaußfunktion ergibt sich aus dem Mittelwert $\vec{Z}_{\alpha N} = (Z_{aN_1}, Z_{aN_2})$ der Betragsfunktion $|\alpha(z_1, z_2)|$ zu

$$\vec{z}_{p_N} \approx N \, \vec{z}_{a_N}$$

mit

$$\vec{z}_{a_N} = \frac{\iint_{-\infty}^{\infty} |a(z_1, z_2)| \, \vec{z} \, dz_1 \, dz_2}{\iint_{-\infty}^{\infty} |a(z_1, z_2)| \, dz_1 \, dz_2}$$

Die Funktion $p_N(y_1, y_2)$ ist also näherungsweise eine reale um den Mittelwert $\overline{Z}_{p_N}$ symmetrische Funktion. Aufgrund der Gesetzmäßigkeiten der Fouriertransformation folgt für die Fouriertransformierte der Funktion $P_N(y_1, y_2)$

daraus ein linearer Phasenverlauf:

$$P_N(y_1, y_2) \sim e^{j\frac{2\pi}{\lambda L} N (z_{a_{N_1}} y_1 + z_{a_{N_2}} y_2)}$$

Für den gesamten gemittelten Phasenverlauf $\overline{\varphi_T}(y_1, y_2)$ resultiert daraus

$$\overline{\varphi_T}(y_1, y_2) \approx \varphi_T(y_1, y_2) + \frac{2\pi}{\lambda L} (z_{a_{N_1}} y_1 + z_{a_{N_2}} y_2)$$

Der gemittelte Phasenverlauf $\overline{\varphi_T}(y_1, y_2)$ beschreibt bis auf einen linearen Phasenverlauf somit die turbulente Wellenfront höherer Ordnung. Der lineare Phasenverlauf ist für die Bestimmung der turbulenten Wellenfront höherer Ordnung nach Definition ohne Relevanz und kann leicht aus der Messung herausgerechnet werden.

Ebenso kann das Intensitätsmittelungsverfahren IMV mathematisch hergeleitet werden. Ausgangspunkt ist wieder die Hin- und Rückpropagation des Mess-Lasers:

$$u_A^+(y_1, y_2) = T^+(y_1, y_2) \frac{1}{(\lambda L)^2} e^{j2kL} \iint\limits_{-\infty}^{\infty} \{a(z_1, z_2)\, r(z_1, z_2)\} e^{-j\frac{2\pi}{\lambda L}(z_1 y_1 + z_2 y_2)} \, dz_1\, dz_2$$

mit

$$a(z_1, z_2) = \iint\limits_{-\infty}^{\infty} u_A^-(y_1, y_2) \, e^{j\frac{2\pi}{\lambda L}(z_1 y_1 + z_2 y_2)} \, dy_1\, dy_2$$

Für das IMV werden alle ortsabhängigen gemessen Intensitäten des rückpropagierten kollimierten Feldes gemittelt:

$$\overline{I(y_1, y_2)} = \frac{1}{N} \sum_{i=1}^{N} u_{A_i}^+(y_1, y_2)\, u_{A_i}^+(y_1, y_2)^*$$

Nach einigen Umformungen erhält man

$$= |T^+(y_1, y_2)|^2 \frac{1}{N(\lambda L)^4}$$

$$\iint\limits_{-\infty}^{\infty} \iint\limits_{-\infty}^{\infty} a(z_1, z_2)\, a(z_1', z_2')^* e^{-j\frac{2\pi}{\lambda L}((z_1 - z_1')y_1 + (z_2 - z_2')y_2)} \sum_{i=1}^{N} r_i(z_1, z_2)\, r_i(z_1', z_2')^* \, dz_1\, dz_2\, dz_1'\, dz_2'$$

Der Summenterm kann für genügend großes N unter Berücksichtigung der statistischen Eigenschaften von $r_i(z_1, z_2)$ abgeschätzt werden durch:

$$\sum_{i=1}^{N} r_i(z_1, z_2) \, r_i(z_1', z_2')^* = r_0^2 \sum_{i=1}^{N} e^{j\left(\Delta\varphi_{s_i}(z_1,z_2) - \Delta\varphi_{s_i}(z_1',z_2')\right)}$$

$$\approx \begin{cases} N\, r_0^2 \Delta z_{korr}^2 & \text{für } |z_1 - z_1'n| < 0.5\, \Delta z_{korr} \; ; \; |z_2 - z_2'n| < 0.5\, \Delta z_{korr} \\ 0 & \text{sonst} \end{cases}$$

$\Delta z_{korr}$ ist die Korrelationslänge der Rauigkeitsfunktion $r(z_1, z_2)$. Damit ergibt sich der folgende Ausdruck:

$$\overline{I(y_1, y_2)} \approx |T^+(y_1, y_2)|^2 \, \frac{\Delta z_{korr}^2}{(\lambda L)^4} \iint_{-\infty}^{\infty} a(z_1, z_2)\, a(z_1, z_2)^* \, dz_1 \, dz_2$$

$$= \text{Konstant} \cdot |T^+(y_1, y_2)|^2$$

Da die Turbulenz für die N statistisch unabhängigen Messungen als konstant angenommen wird, ist damit $\iint_{-\infty}^{\infty} a(z_1, z_2)\, a(z_1, z_2)^* \, dz_1 \, dz_2$ eine Konstante. Resultierend ist für genügend große N die gemittelte Intensitätsverteilung proportional zum Quadrat der örtlichen Amplitudenverteilung der Turbulenzfunktion $T^+(y_1, y_2)$.

Fig. 3 zeigt eine schematische Ansicht eines Systems 10 zur Messung und Unterdrückung des Einflusses turbulenter Störungen auf die Laserbestrahlung eines Ziels 12 gemäß einer weiteren Ausführungsform der Erfindung. Diese Realisierungsvariante soll beispielhaft das Potenzial des beschriebenen PMIV zur Messung und Kompensation des Turbulenzfeldes hO verdeutlichen, wobei insbesondere sehr hohe Bandbreiten umsetzbar sind.

In dieser Realisierungsvariante wird die Wellenfrontmessung einer Einzelmessung mit Hilfe eines optischen Heterodyn-Detektors als Sensoreinrichtung 8 umgesetzt. In dem Heterodyn-Detektor wird auf einem MxM Diodenarray der rückreflektierte kollimierte Reflexionslaserstrahl 5 überlagert mit einem kollimierten Teilstrahl 22 des Messlasers, der geringfügig durch einen Wellenlängen-Modulator 18 in seiner Wellenlänge verschoben ist (d.h. $\lambda$ + d$\lambda$). Auf dem MxM Diodenarray der Sensoreinrichtung 8 werden diese beiden Strahlen gemischt und es entsteht in jeder Diode ein Signal:

- mit der Zwischenfrequenz, die dem Wellenlängenunterschied entspricht,
- einer Amplitude, die der Multiplikation der Feldamplitude der beiden Strahlen entspricht, und
- einer Phase, die der Phasendifferenz zwischen der Referenzwelle des Messlasers 4 und der ortsabhängigen Phase, die dem Reflexionslaserstrahl 5 entspricht.

Mit bekannten Verfahren der Radartechnik kann eine geeignete Signalprozessierung 17 daraus den zu messenden ortsabhängigen Phasen- und Amplitudenverlauf des rückreflektierten kollimierten Reflexionslaserstrahls 5 ermitteln und an einen Wellenfrontrechner in der Berechnungseinrichtung 13 weitergeben. Bei der Auswertung mit Hilfe der Signalprozessierung 17 ist noch die Zielbewegung zu berücksichtigen, die eine Dopplerverschiebung verursachen kann. (Optische Empfangsdioden sind mit hohen Bandbreiten über 20GHz zu erhalten. Durch moderne A/D Wandler und schnelle Signalprozessoren kann man Auswertezeiten im Bereich kleiner 10ns erwarten.)

Die Berechnungseinrichtung 13 steuert den ganzen Messablauf, ermittelt durch Mittelung von N gemessenen ortsabhängigen Phasen- und Amplitudenverlaufs das geschätzte Turbulenzfeld hO, und kann daraus auch das konjugierte Turbulenzfeld hO bestimmen. Des Weiteren steuert die Berechnungseinrichtung 13 die Korrektureinrichtung 7 an.

Die Korrektureinrichtung 7, einschließlich Tip-Tilt-Einheit zur Erzeugung statistisch unabhängiger Messungen, wird in dieser Realisierungsvariante durch Phasenschieberelemente 20 umgesetzt, die die kohärenten Teilstrahlen des Messlaserstrahls 4 um eine vorgegebene Phase verschieben. Über diese ortabhängige Phasensteuerung kann sowohl eine Tip/Tilt-Bewegung für die N statistisch unabhängigen Einzelmessungen, als auch eine Phasenkorrektur mit Hilfe der im Wellenfrontrechner der Berechnungseinrichtung 13 berechneten konjugierten Wellenfront der Turbulenz realisiert werden. Moduliert man zusätzlich die Einzelintensitäten aus den Amplitudenmessungen des Turbulenzfeldes erhält man den bestmöglichen kompensierten Strahl mit dem kleinsten möglichen Spotdurchmesser auf dem Ziel 12.

Beispielsweise kann man für den Messlaser der Lasereinrichtung 1 einen Faserlaseraufbau und für die Phasenschieberelemente gängige Glasfaser-Bauelemente einsetzen. Dies ermöglicht eine Modulation der Einzelphasen mit einer sehr hohen Bandbreite (über 10GHz). Die Einzelstrahlen 24 werden über einen Strahlkombinierer 21 wieder zu einem Gesamtstrahl 4 zusammengeführt. Strahlteiler 9, welche die hin- und rücklaufende Welle trennen, bzw. wieder vereinen, können entweder verlustbehaftet oder polarisationssensitiv ausgelegt werden. (Bei einer polarisationssensitiven Auslegung muss allerdings davon ausgegangen werden, dass durch die Strahlreflektion auf dem Ziel aus dem linear polarisierten Licht des Messlaserstrahls 4 ein nicht polarisierter Reflex entsteht. Dies muss nicht für alle rauen Oberflächen der Fall sein.)

In der Variante gemäß Fig. 3 kann ein CBC HEL eingesetzt werden, d.h. die Anordnung kann als Laserwaffe zur Erzeugung eines Wirklaserstrahls 14 ausgebildet sein, dessen Turbulenzfeld hO wie vorstehen beschrieben kompensiert wird. Ein Vorteil dieser Variante ist, dass kein zusätzlicher Messlaser notwendig ist. Ein möglicher Nachteil ist, dass die Strahlreflektion vom Ziel durch die Interaktion des HELs mit dem Zielmaterial beeinflusst werden kann. Auch die Strahlteilung und die Unterdrückung von Streustrahlung insbesondere innerhalb der Optik können technologisch große Herausforderungen stellen.

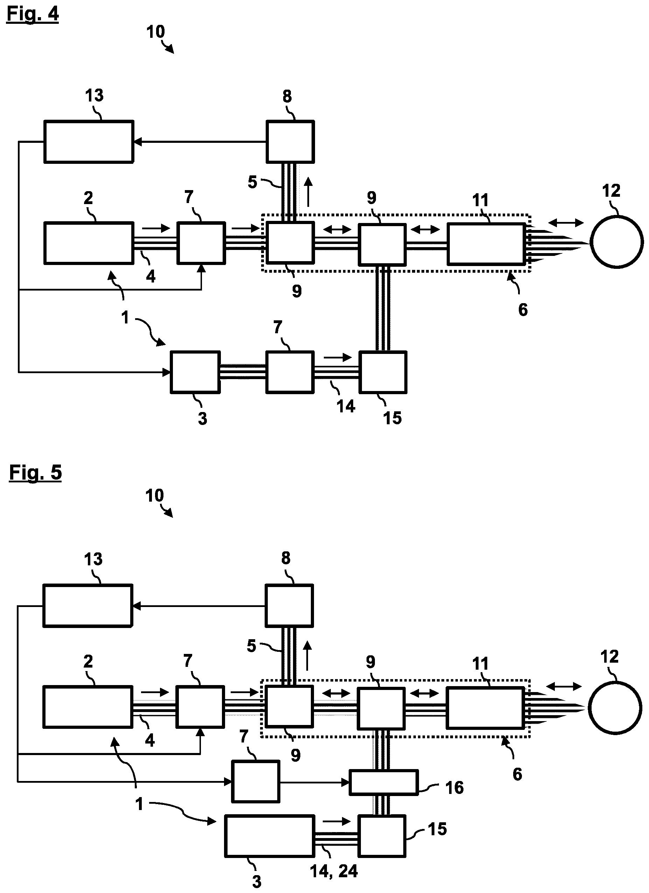

Fig. 4 und 5 zeigen ebenfalls beispielhafte Ausgestaltungen der Erfindung als Laserwaffe, wobei entgegen zu jener aus Fig. 3 getrennte Messlaser 2 und Wirklaser 3 bereitgestellt werden. Konsequenterweise haben Messlaser 2 und Wirklaser 3 in diesen Beispielen unterschiedliche Wellenlängen.

In der Variante in Fig. 4 wird ebenfalls ein CBC-HEL einsetzt. Die Phasen und ggf. die Amplituden der Einzelkanäle (nicht dargestellt) des kohärenten HELs 3 werden mit Hilfe des konjugierten Turbulenzfeldes hO eingestellt und damit für den Ausgangsstrahl 14 vorverzerrt. Vorteil dieser Methode gegenüber derjenigen in Fig. 3 ist es, dass der Messlaserstrahl 4 innerhalb des isoplanatischen Winkels neben den HEL-Spot des Wirklaserstrahls 14 positioniert werden kann. Damit wird die Turbulenzmessung nicht von der Interaktion des Wirklaserstrahls 14 mit dem Zielmaterial beeinflusst. Durch die Wellenlängentrennung des HELs 3 und des Messlasers 2 kann der PIMV-Messkanal wesentlich besser gegen HEL-Streustrahlung geschützt werden. Allerdings erfordert diese Methode mehr Komponenten als die Variante in Fig. 3.

Das Beispiel in Fig. 5 ist geeignet für alle Einzel-Ausgangsstrahl HEL-Quellen. Diese bieten in der Regel keine Möglichkeit, die Phasen- und Amplitudenfront des HEL-Strahls zu regeln. Um dennoch eine Turbulenzkompensation zu realisieren, kann ein verformbarer Spiegel 16 eingesetzt werden, dessen Oberfläche mit der Phase des konjugierten Turbulenzfeldes angesteuert wird. Ebenso wie in der Variante in Fig. 4 gilt, dass der Messlaserstrahl 4 innerhalb des isoplanatischen Winkels neben den HEL-Spot positioniert werden kann. Damit wird die Turbulenzmessung nicht von der Interaktion des Wirklaserstrahls 14 mit dem Zielmaterial beeinflusst. Durch die Wellenlängentrennung des HELs 3 und des Messlasers 2 kann der PIMV-Messkanal wesentlich besser gegen HEL-Streustrahlung geschützt werden. Allerdings ist diese Methode aufgrund der limitierten Bandbreite des verformbaren Spiegels 16 in ihrer Regelbandbreite begrenzt. Damit ist diese Methode weniger geeignet für die Bekämpfung von schnellen Zielen bei hohen Turbulenzen. Da in dieser Variante ein verformbarer Spiegel 16 eingesetzt wird, können damit auch die turbulenzinduzierten Bildverschlechterungen einer möglichen Trackingkamera reduziert werden.

Es versteht sich, dass in den vorstehenden Ausführungsbeispielen lediglich diejenigen optischen, mechanischen und elektronischen Anteile des Realisierungsverfahrens dargestellt wurden, welche für die Unterdrückung der Turbulenz hO notwendig sind. Für den Fachmann ist einfach ersichtlich, wie weitere optische, mechanische und elektronische Komponenten für ein HEL-Waffensystem integriert werden können, um ein vollständiges Waffensystem zu realisieren.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

**Bezugszeichenliste**

| 1 | Lasereinrichtung |
|---|---|
| 2 | Messlaser |
| 3 | Wirklaser |

| 4 | Messlaserstrahl |
|---|---|
| 5 | Reflexionslaserstrahl |
| 6 | optische Einrichtung |
| 7 | Korrektureinrichtung |
| 8 | Sensoreinrichtung |
| 9 | Strahlteiler |
| 10 | System |
| 11 | Teleskop |
| 12 | Ziel |
| 13 | Berechnungseinrichtung |
| 14 | Wirklaserstrahl |
| 15 | Umlenkspiegel |
| 16 | verformbarer Spiegel |
| 17 | Signalprozessierung |
| 18 | Wellenlängen-Modulator |
| 19 | Kollimator |
| 20 | Phasenschieber |
| 21 | Strahlkombinierer |
| 22 | Teilstrahl/Modulationsstrahl |
| 23 | halbdurchlässiger Spiegel |
| 24 | Einzelstrahl |
| M | Verfahren |
| M1-M5 | Verfahrensschritte |

**Patentansprüche**

1. Verfahren (M) zur Messung und Unterdrückung des Einflusses turbulenter Störungen auf die Laserbestrahlung eines Ziels (12), mit:

   Fokussieren (M1) eines Messlaserstrahls (4) auf das Ziel (12) mit einer optischen Einrichtung (6);
   Kollimieren (M2) eines von dem Ziel (12) aufgrund der Bestrahlung mit dem Messlaserstrahl (4) zurückreflektierten und mit der optischen Einrichtung (6) empfangenen Reflexionslaserstrahls (5) in einer Sensorebene;
   wiederholtes Messen (M3) einer ortsabhängigen Phase und/oder einer ortsabhängigen Amplitude des kollimierten Reflexionslaserstrahls (5) in der Sensorebene in einer Anzahl von Einzelmessungen, wobei der Messlaserstrahl (4) nach jeder Einzelmessung derart angepasst wird, dass die Einzelmessungen statistisch unabhängig voneinander sind; und
   Mitteln (M4) der gemessenen ortsabhängigen Phasen und/oder der gemessenen ortsabhängigen Amplituden über die Anzahl von Einzelmessungen zur Abschätzung einer Turbulenzstörung des Messlaserstrahls (4).

2. Verfahren (M) nach Anspruch 1, wobei der Messlaserstrahl (4) nach jeder Einzelmessung auf dem Ziel (12) verschoben und/oder verzerrt wird, um die Einzelmessungen statistisch unabhängig voneinander zumachen.

3. Verfahren (M) nach Anspruch 1 oder 2, wobei ein in der Wellenlänge verschobener Modulationsstrahl (22) des Messlaserstrahls (4) erzeugt und mit dem kollimierten Reflexionslaserstrahl (5) in der Sensorebene überlagert wird, wobei die ortsabhängige Phase und/oder die ortsabhängige Amplitude des kollimierten Reflexionslaserstrahls (5) über eine heterodyne Detektion gemessen wird.

4. Verfahren (M) nach einem der Ansprüche 1 bis 3, weiterhin mit:
   Anpassen (M5) der Laserbestrahlung des Ziels (12) in Abhängigkeit von der abgeschätzten Turbulenzstörung, um den Einfluss von Turbulenzen zu kompensieren.

5. Verfahren (M) nach Anspruch 4, wobei eine Phasenanpassung und/oder eine Amplitudenanpassung der Laserbestrahlung des Ziels (12) auf Basis der gemessenen ortsabhängigen Phasen und/oder der gemessenen ortsabhängigen Amplituden durchgeführt wird.

6. Verfahren (M) nach Anspruch 5, wobei der Messlaserstrahl (4) eine Vielzahl von kohärent gekoppelten Einzelstrahlen (24) aufweist, wobei die Phasen und/oder die Amplituden der Einzelstrahlen (24) auf Basis der gemessenen ortsabhängigen Phasen und/oder der gemessenen ortsabhängigen Amplituden angepasst werden.

7. Verfahren (M) nach einem der Ansprüche 4 bis 6, wobei das Ziel (12) mit einem Wirklaserstrahl (14) einer Laserwaffe bestrahlt wird, wobei die Bestrahlung des Ziels (12) mit dem Wirklaserstrahl (14) in Abhängigkeit von der abgeschätzten Turbulenzstörung angepasst wird, um den Einfluss von Turbulenzen zu kompensieren.

8. Verfahren (M) nach Anspruch 7, wobei der Wirklaserstrahl (14) auf Basis der gemessenen ortsabhängigen Phasen durch Phasenanpassung vorverzerrt wird und/oder auf Basis der gemessenen ortsabhängigen Amplituden durch Amplitudenanpassung moduliert wird.

9. Verfahren (M) nach Anspruch 7 oder 8, wobei der Wirklaserstrahl (14) eine Vielzahl von kohärent gekoppelten Einzelstrahlen (24) aufweist, wobei die Phasen und/oder die Amplituden der Einzelstrahlen (24) auf Basis der gemessenen ortsabhängigen Phasen und/oder der gemessenen ortsabhängigen Amplituden angepasst werden.

10. Verfahren (M) nach einem der Ansprüche 7 bis 9, wobei der Wirklaserstrahl (14) als Messlaserstrahl (4) eingesetzt wird.

11. Verfahren (M) nach einem der Ansprüche 7 bis 9, wobei der Wirklaserstrahl (14) eine unterschiedliche Wellenlänge als der Messlaserstrahl (4) aufweist.

12. Verfahren (M) nach Anspruch 11, wobei der Wirklaserstrahl (14) innerhalb des isoplanatischen Winkels neben den Messlaserstrahl (4) auf einen räumlich getrennten Bereich des Ziels (12) fokussiert wird.

13. Verfahren (M) nach Anspruch 11 oder 12, wobei der Wirklaserstrahl (14) über einen mechanisch verformbaren Spiegel (16) geregelt wird, welcher in Abhängigkeit von der abgeschätzten Turbulenzstörung angesteuert wird.

14. System (10) zur Messung und Unterdrückung des Einflusses turbulenter Störungen mit einem Verfahren (M) nach einem der Ansprüche 1 bis 13, mit:

   einer Lasereinrichtung (1), welche zur Erzeugung eines Messlaserstrahls (4) ausgebildet ist;
   einer optischen Einrichtung (6), welche zur Fokussierung des Messlaserstrahls (4) auf das Ziel (12), zum Empfang eines von dem Ziel (12) aufgrund der Bestrahlung mit dem Messlaserstrahl (4) zurückreflektierten Reflexionslaserstrahls (5) und zur Kollimierung des zurückreflektierten Reflexionslaserstrahls (5) in einer Sensorebene ausgebildet ist;
   einer Sensoreinrichtung (8), welche zum wiederholten Messen einer ortsabhängigen Phase und/oder einer ortsabhängigen Amplitude des kollimierten Reflexionslaserstrahls (5) in der Sensorebene in einer Anzahl von Einzelmessungen ausgebildet ist, wobei der Messlaserstrahl (4) nach jeder Einzelmessung derart angepasst wird, dass die Einzelmessungen statistisch unabhängig voneinander sind; und
   einer Berechnungseinrichtung (13), welche dazu ausgebildet ist, die gemessenen ortsabhängigen Phasen und/oder die gemessenen ortsabhängigen Amplituden über die Anzahl von Einzelmessungen zu mitteln und darauf aufbauend eine Turbulenzstörung des Messlaserstrahls (4) abzuschätzen.

15. System (10) nach Anspruch 14, wobei die Sensoreinrichtung (8) einen optischen Heterodyn-Detektor umfasst, wobei das System (10) weiterhin einen Wellenlängen-Modulator (18) und einen Kollimator (19) umfasst, wobei die Lasereinrichtung (1) dazu ausgebildet ist, einen in der Wellenlänge verschobenen Modulationsstrahl (22) des Messlaserstrahls (4) über den Wellenlängen-Modulator (18) und den Kollimator (19) zu erzeugen und in die Sensoreinrichtung (8) einzukoppeln, wobei die Sensoreinrichtung (8) dazu ausgebildet ist, den Modulationsstrahl (22) mit dem kollimierten Reflexionslaserstrahl (5) zu überlagern und über eine heterodyne Detektion die ortsabhängige Phase und/oder die ortsabhängige Amplitude des kollimierten Reflexionslaserstrahls (5) zu messen.

16. System (10) nach Anspruch 15, wobei der Heterodyn-Detektor der Sensoreinrichtung (8) ein Diodenarray zur Vermischung des Modulationsstrahl (22) mit dem kollimierten Reflexionslaserstrahl (5) umfasst.

17. System (10) nach einem der Ansprüche 14 bis 16, weiterhin mit:
   einer Korrektureinrichtung (7), welche dazu ausgebildet ist, zur Turbulenzkompensation eine Phasenpassung und/oder eine Amplitudenanpassung der Laserbestrahlung des Ziels (12) in Abhängigkeit von der abgeschätzten Turbulenzstörung durchzuführen.

**18.** System (10) nach Anspruch 17, wobei die Lasereinrichtung (1) zur Erzeugung einer Vielzahl von kohärent gekoppelten Einzelstrahlen (24) als Messlaserstrahl (4) und die Korrektureinrichtung (7) dazu ausgebildet ist, die Phasen und/oder die Amplituden der Einzelstrahlen (24) auf Basis der gemessenen ortsabhängigen Phasen und/oder der gemessenen ortsabhängigen Amplituden anzupassen.

**19.** System (10) nach Anspruch 17 oder 18, wobei das System (10) als Laserwaffe zur Erzeugung eines Wirklaserstrahls (14) für die Bestrahlung des Ziels (12) ausgebildet ist, wobei die Korrektureinrichtung (7) dazu ausgebildet ist, den Wirklaserstrahl (14) in Abhängigkeit von der abgeschätzten Turbulenzstörung anzupassen.

**20.** System (10) nach Anspruch 19, wobei die Laserwaffe zur Erzeugung einer Vielzahl von kohärent gekoppelten Einzelstrahlen (24) als Wirklaserstrahl (14) und die Korrektureinrichtung (7) dazu ausgebildet ist, die Phasen und/oder die Amplituden der Einzelstrahlen (24) auf Basis der gemessenen ortsabhängigen Phasen und/oder der gemessenen ortsabhängigen Amplituden anzupassen, oder wobei die Laserwaffe zur Erzeugung eines Einzelstrahls (24) als Wirklaserstrahl (14) ausgebildet ist, welcher über einen mechanisch verformbaren Spiegel (16) regelbar ist, der von der Korrektureinrichtung (7) in Abhängigkeit von der abgeschätzten Turbulenzstörung ansteuerbar ist.

**Fig. 1**

**Fig. 2**

**Fig. 3**

Fig. 4

Fig. 5

Europäisches Patentamt
European Patent Office
Office européen des brevets

**EUROPÄISCHER RECHERCHENBERICHT**

**Nummer der Anmeldung**

**EP 21 21 7863**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | VORONTSOV ET AL: "Analysis of wave propagation and wavefront sensing in target-in- the-loop beam control systems", SPIE, PO BOX 10 BELLINGHAM WA 98227-0010 USA, 18. Oktober 2004 (2004-10-18), XP040190940, DOI: 10.1117/12.561447 | 1,2,4,5, 7,8,10, 14,17,19 | INV. F41G7/22 F41H13/00 G01S7/497 G02B26/06 G02B27/00 G01S17/66 |
| Y | * Absatz [03.1] *<br>* Absatz [0007] *<br>* Absatz [03.3] *<br>* Absatz [1.10] *<br>----- | 3,6,9, 11-13, 15,16, 18,20 | |
| Y | US 7 405 834 B1 (MARRON JOSEPH C [US] ET AL) 29. Juli 2008 (2008-07-29)<br>* Spalte 9, Zeile 7 – Spalte 10, Zeile 34; Abbildungen 5a,b *<br>----- | 3,15,16 | |
| Y | US 2006/022115 A1 (BYREN ROBERT W [US]) 2. Februar 2006 (2006-02-02)<br>* Absatz [0039] – Absatz [0057]; Abbildungen 2-5 *<br>----- | 6,9,18, 20 | |
| Y | US 8 218 589 B1 (SAUNDERS PATRICK [US]) 10. Juli 2012 (2012-07-10)<br>* Spalte 1, Zeile 21 – Zeile 67; Abbildungen 1,2 *<br>----- | 11-13 | RECHERCHIERTE SACHGEBIETE (IPC)<br><br>F41G<br>F42D<br>F41H<br>G01S<br>G02B |

Der vorliegende Recherchenbericht wurde für alle Patentansprüche erstellt

| Recherchenort | Abschlußdatum der Recherche | Prüfer |
|---|---|---|
| München | 9. Juni 2022 | Kaleve, Abraham |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 7863

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-06-2022

| Im Recherchenbericht angeführtes Patentdokument | Datum der Veröffentlichung | Mitglied(er) der Patentfamilie | Datum der Veröffentlichung |
|---|---|---|---|
| US 7405834 B1 | 29-07-2008 | KEINE | |
| US 2006022115 A1 | 02-02-2006 | EP 1779176 A1 | 02-05-2007 |
| | | IL 179315 A | 31-10-2011 |
| | | US 2006022115 A1 | 02-02-2006 |
| | | WO 2006076043 A1 | 20-07-2006 |
| US 8218589 B1 | 10-07-2012 | KEINE | |

Für nähere Einzelheiten zu diesem Anhang : siehe Amtsblatt des Europäischen Patentamts, Nr.12/82

EPO FORM P0461